# EUROPÄISCHE PATENTSCHRIFT

(11) **EP 1 332 950 B1**
(45) Veröffentlichungstag und Bekanntmachung des Hinweises auf die Patenterteilung: **30.03.2005**
(21) Anmeldenummer: 02013279.1
(22) Anmeldetag: 01.07.2002
(51) Int. Cl.: B62D 25/14

(54) **Vorrichtung zum Justieren der Einbaulage eines Mehrkomponentenmoduls in einem Kraftfahrzeug**
Adjusting device for the correct positioning of a multicomponent module in a vehicle
Dispositif d'ajustement du positionement correct d'un module comportant plusieurs composants dans un vehicule

(30) Priorität: 04.02.2002 DE 10204557
(43) Veröffentlichungstag der Anmeldung: 06.08.2003
(73) Patentinhaber: Benteler Automobiltechnik GmbH, 33104 Paderborn (DE)
(72) Erfinder: Hövener Jörg, 33158 Salzkotten (DE)
(74) Vertreter: Ksoll, Peter, Dr.-Ing.

(56) Entgegenhaltungen:
- DE-A- 10 003 981
- DE-A- 10 016 144
- DE-C- 10 010 709

## Beschreibung

Die Erfindung betrifft eine Vorrichtung zum Justieren der Einbaulage eines Mehrkomponentenmoduls, insbesondere einer Instrumententafel innerhalb einer Kraftfahrzeugkarosserie.

Beim Zusammenbau bzw. der Montage vorgefertigter Mehrkomponentenmodule kann es aufgrund von Bauteiltoleranzen und fertigungstechnisch unvermeidbarer Abweichungen zu Verbausituationen kommen, die nach der Endmontage eine Justierung oder Ausrichtung erforderlich machen.

So ist beispielsweise im Automobilbau der Instrumententafelbereich ein sensibler Bereich. Bei der Endmontage von Kraftfahrzeugen erfolgt der Einbau einer vormontierten Instrumententafel über einen die Instrumententafel als Ganzes haltenden Montageroboter. Dieser führt die Instrumententafel in eine fertig geschweißte und lackierte Rohbaukarosserie ein und positioniert sie dort. In der Einbaulage zwischen den sich gegenüberliegenden A-Säulen der Karosserie wird die Instrumententafel anschließend mittels Befestigungselementen festgelegt.

Aufgrund von Fertigungstoleranzen, Steuerungsabweichungen des Montageroboters und anderer Fehlerquellen ist das Erreichen und Einhalten einer exakt ausgerichteten Soll-Position der Instrumententafel oft nicht gegeben. Folglich muss eine Nachjustierung vorgenommen werden.

In diesem Zusammenhang zählt durch die DE 100 03 981 A1 eine Anordnung zum positionsgerechten Verbinden von Bauteilen zum Stand der Technik. Die Montagelage der Bauteile ist relativ zueinander durch an einem Passstück angreifende und mit den Bauteilen verbundene Exzenter dreidimensional justierbar. Die Exzenter sind in Langlöchern eines winkelförmig ausgebildeten Passstücks abgestützt und durch eine Sicherung in Form eines Schlagstifts lagefixierbar.

Mit Hilfe dieser Anordnung ist es möglich, die Bauteile beim Zusammenbau positionsgerecht mit begrenztem Kraftaufwand in die Montagelage zu rücken und anschließend spannungsfrei mittels Verbindungsschrauben zu fügen. Das Passstück schafft hierbei eine funktionsbedingte Beweglichkeit der Bauteile zueinander. Dennoch sind komplexe präzise auszuführende Arbeitsvorgänge bei der Montage notwendig, um die gewünschte Positionierung vorzunehmen. Auch ist die Zugänglichkeit der Exzenter ebenso wie der Verbindungsschrauben in der Einbaulage mitunter schwierig

Die gattungsbildende DE 100 16 144 A1 beschreibt eine Vorrichtung zum Justieren einer Instrumententafel in einer Kraftfahrzeugkarosserie. Hierbei weist die Instrumententafel eine integrierte Justiereinrichtung auf. Innerhalb der Justiereinrichtung sind keilförmig ausgebildete Elemente mit zueinander komplimentären Schrägflächen und ein Exzenter angeordnet. Mittels der Justiereinrichtung kann eine dreidimensionale Ausrichtung der Instrumententafel in der Einbaulage erfolgen.

Der Erfindung liegt ausgehend vom Stand der Technik die Aufgabe zugrunde, eine in der Handhabung einfach gestaltete und montagemäßig verbesserte Vorrichtung zum Justieren der Einbaulage eines Mehrkomponentenmoduls, insbesondere einer Instrumententafel, innerhalb einer Kraftfahrzeugkarosserie zu schaffen.

Die Lösung dieser Aufgabe besteht nach der Erfindung in einer Instrumententafel gemäß den Merkmalen von Patentanspruch 1.

Danach ist der Montageträger des Mehrkomponentenmoduls über ein Verbindungsbauteil an der Kraftfahrzeugkarosserie festlegbar, wobei ein Einstellbolzen mit einer Schlüsselfläche vorgesehen ist, der mit einem zur Längsachse exzentrischen Kopfabschnitt eine Öffnung im Verbindungsbauteil durchsetzt. Ein Flansch des Einstellbolzens liegt unter Vorspannung am Verbindungsbauteil an. Auf der anderen Seite des Verbindungsbauteils ist der Kopfabschnitt in einer Aufnahme gehalten und durch eine Sicherung lageorientiert.

Durch Betätigung des Einstellbolzens über ein an der Schlüsselfläche ansetzendes Werkzeug kann der darauf gelagerte Montageträger und mit diesem das Mehrkomponentenmodul in seine Endposition gerückt werden. Anschließend wird er dort bauteilgerecht fixiert.

Die Aufnahme ist vorzugsweise in Form einer Hülse gestaltet. Diese ist am Verbindungsbauteil gefügt, beispielsweise eingepresst, gestanzt oder verschweißt. Der Kopfabschnitt des Einstellbolzens wird von der Hülse aufgenommen und durch die Sicherung gegen Herausfallen gesichert. Eine weitere Funktion der Sicherung besteht darin, eine axiale Vorspannung auf den Einstellbolzen aufzubringen. Aus diesem Grund ist die Sicherung als Federring ausgebildet. Ein solcher Federring kann konkave oder konvexe Geometrie besitzen.

Der Flansch des Einstellbolzens ist mit einer Zentriernase versehen und am Verbindungsbauteil ist eine Ausnehmung für die Zentriernase angeordnet. Die Zentriernase und die entsprechende Ausnehmung im Verbindungsbauteil dienen der eigentlichen Zentrierung bzw. der Fixierung des Einstellbolzens in seiner Nullstellung. In dieser Nullstellung wird der Einstellbolzen durch die über die Sicherung erzeugte Vorspannung gehalten. Vorzugsweise ist die Zentriernase rechteckig ausgeführt. Diese Ausgestaltung verhindert, dass der Einstellbolzen bei Betätigung im Verstellbereich kleiner Drehwinkel in die Ausnehmung zurück gleitet oder springt.

Vorteilhafte Ausgestaltungen der erfindungsgemäßen Vorrichtung ergeben sich aus den Merkmalen der abhängigen Ansprüche 2 bis 5.

Der Flansch des Einstellbolzens dient zur Aufnahme von Druckkräften in axialer Richtung. Am Flansch ist eine Orientierungshilfe zur Lagepositionierung vorgesehen. Für die Praxis bietet sich an, die Orientierungshilfe durch eine Fase am äußeren Umfang des Flanschs auszubilden. Diese Fase ermöglicht eine zielgerechte definierte Aufnahme des Einstellbolzens mit der Aufnahmevorrichtung eines Handhabungsautomaten und gewährleistet damit die automatisierte Montage des Einstellbolzens.

Die Betätigung des Einstellbolzens erfolgt über die Schlüsselfläche. An der Schlüsselfläche kann ein Werkzeug angesetzt und der Einstellbolzen gedreht werden. Besonders zweckmäßig ist die Schlüsselfläche am Außenumfang des Einstellbolzens vorgesehen, und zwar an dem dem Kopfabschnitt gegenüber liegenden Ende des Einstellbolzens.

Möglich ist es auch, die Schlüsselfläche durch einen Innenmehrkant am Einstellbolzen auszubilden.

Beim Betätigen des Einstellbolzens dreht sich dieser aus seiner Nullstellung. Die Zentriernase verlässt die Ausnehmung im Verbindungsbauteil. Die Vorspannung verursacht an der Zentriernase eine hohe Reibung. Auf diese Weise ist die erforderliche Selbsthemmung in jeder beliebigen Drehposition des Einstellbolzens gewährleistet.

Eine Instrumententafel wird von einem Handhabungsautomaten bzw. Montageroboter gefasst und in die Kraftfahrzeugkarosserie eingeführt. Der Montage- bzw. Instrumententafelträger der Instrumententafel wird dann beidseitig mit seinen Enden an den Verbindungsbauteilen, welche an den A-Säulen befestigt sind, aufgeschoben. Zweckmäßigerweise sind am Verbindungsbauteil neben dem Einstellbolzen zusätzlich zumindest jeweils ein Tragbolzen vorhanden. Die Tragbolzen ihrerseits sind vorzugsweise als Gewindebolzen ausgeführt. Nach dem Montagevorgang kann die Position der gesamten Instrumententafel durch Betätigung der Einstellbolzen justiert und ausgerichtet werden. Auf diese Weise ist eine Optimierung der Abstände am Übergang von Schalttafel zur Türverkleidung möglich. Anschließend wird die Instrumententafel durch geeignete Befestigungsmittel lagefixiert. Für die Praxis bietet sich an, hierfür die mit Gewinde versehenen Tragbolzen zu nutzen und den Instrumententafelträger mittels Gewindemuttern zu verspannen.

Die Erfindung ist nachfolgend anhand eines in den Zeichnungen dargestellten Ausführungsbeispiels näher beschrieben. Es zeigen:
- Figur 1: in einer vertikalen Schnittansicht eine erfindungsgemäße Vorrichtung;
- Figur 2: eine technisch vereinfachte Draufsicht auf einen Ausschnitt der Darstellung gemäß Figur 1;
- Figuren 3 und 4: zwei Ansichten auf computergenerierte Darstellungen der erfindungsgemäßen Vorrichtung;
- Figur 5: einen Einstellbolzen in einer vertikalen Schnittdarstellung;
- Figuren 6 bis 8: den Einstellbolzen mit einem Ausschnitt des Verbindungsbauteils in drei perspektivischen Ansichten.

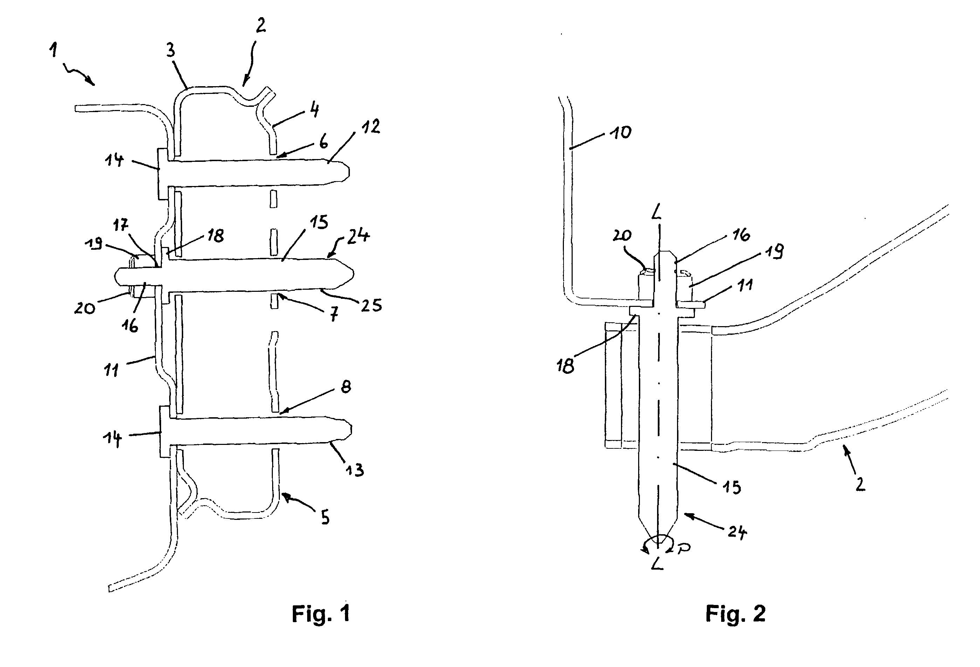

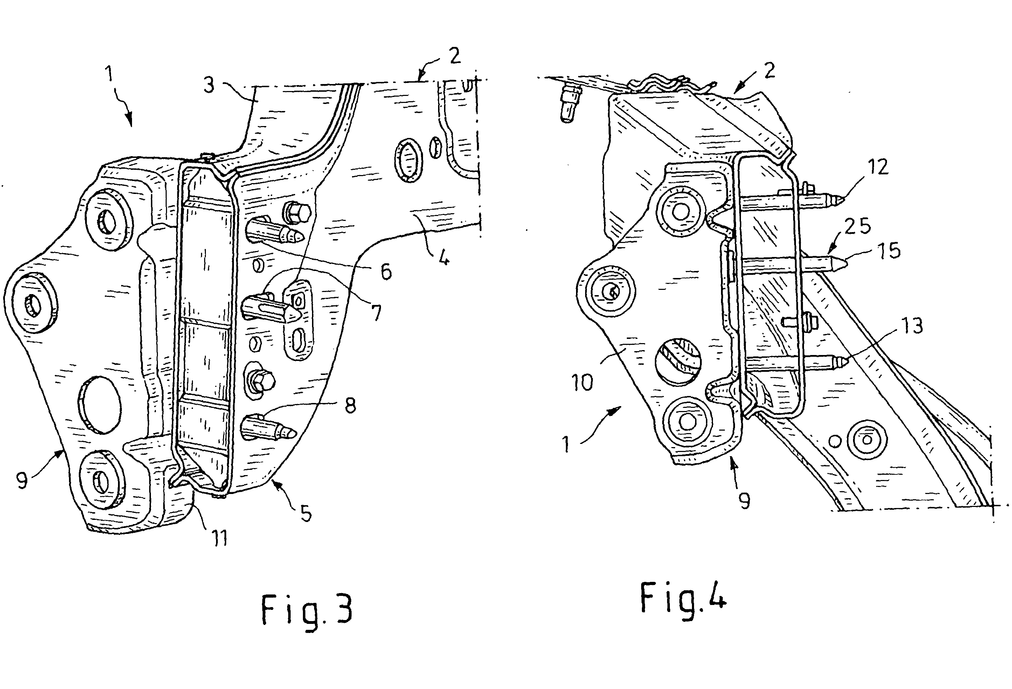

Die Figuren 1 bis 8 beschreiben eine in seiner Allgemeinheit mit 1 bezeichnete Vorrichtung zum Justieren der Einbaulage eines Mehrkomponentenmoduls, nämlich einen Instrumententafelträger 2 innerhalb einer Kraftfahrzeugkarosserie. Von der ansonsten nicht näher dargestellten Instrumententafel erkennt man in den Figuren 1 bis 4 den Montage- bzw. Instrumententafelträger 2. Dieser besteht aus zwei aneinander gefügten Pressschalen 3, 4. Jeweils an beiden Enden 5 weist der Instrumententafelträger 2 Montageöffnungen 6-8 für die Festlegung innerhalb der Kraftfahrzeugkarosserie auf.

Die Vorrichtung 1 umfasst ein winkelförmiges Verbindungsbauteil 9. Jeweils links und rechts an den A-Säulen der Kraftfahrzeugkarosserie ist ein solches Verbindungsbauteil 9 mit seinem Schenkel 10 montiert. Am zum Instrumententafelträger 2 gerichteten Schenkel 11 des Verbindungsbauteils 8 befinden sich ein oberer Tragbolzen 12 und ein unterer Tragbolzen 13. Diese sind jeweils mit ihren Köpfen 14 am Verbindungsbauteil 8 festgelegt. Zwischen dem oberen Tragbolzen 12 und dem unteren Tragbolzen 13 ist ein Einstellbolzen 15 angeordnet. Der Einstellbolzen 15 durchsetzt mit einem zu seiner Längsachse L exzentrischen Kopfabschnitt 16 (siehe hierzu insbesondere Figur 2) eine Öffnung 17 im Verbindungsbauteil 9. Mit einem Flansch 18 liegt der Einstellbolzen 15 am Verbindungsbauteil 9 an, wobei der Kopfabschnitt 16 auf der anderen Seite des Verbindungsbauteils 9 in einer Aufnahme 19 gehalten und hier durch eine Sicherung 20 fixiert ist. Die Aufnahme 19 wird durch eine am Verbindungsbauteil 9 festgelegte Hülse gebildet. Die Sicherung 20 ist als Federring gestaltet und erzeugt auf dem Einstellbolzen 15 eine axiale Vorspannung.

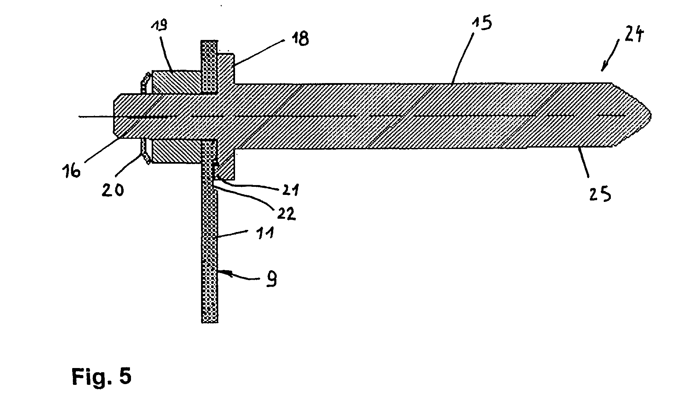

Wie insbesondere anhand der Figuren 5, 6 und 8 zu erkennen ist, weist der Flansch 18 eine Zentriernase 21 auf. Am Verbindungsbauteil 9 ist eine entsprechend gestaltete Ausnehmung 22 für die Zentriernase 21 angeordnet. Im Querschnitt ist die Zentriernase 21 rechteckig. Mittels der Zentriernase 21 und der Aufnehmung 22 im Verbindungsbauteil 9 erfolgt die Zentrierung und die Fixierung des Einstellbolzens 15 in seiner Nullstellung. In der Nullstellung wird der Einstellbolzen 15 durch die Vorspannung des Federrings 20 gehalten.

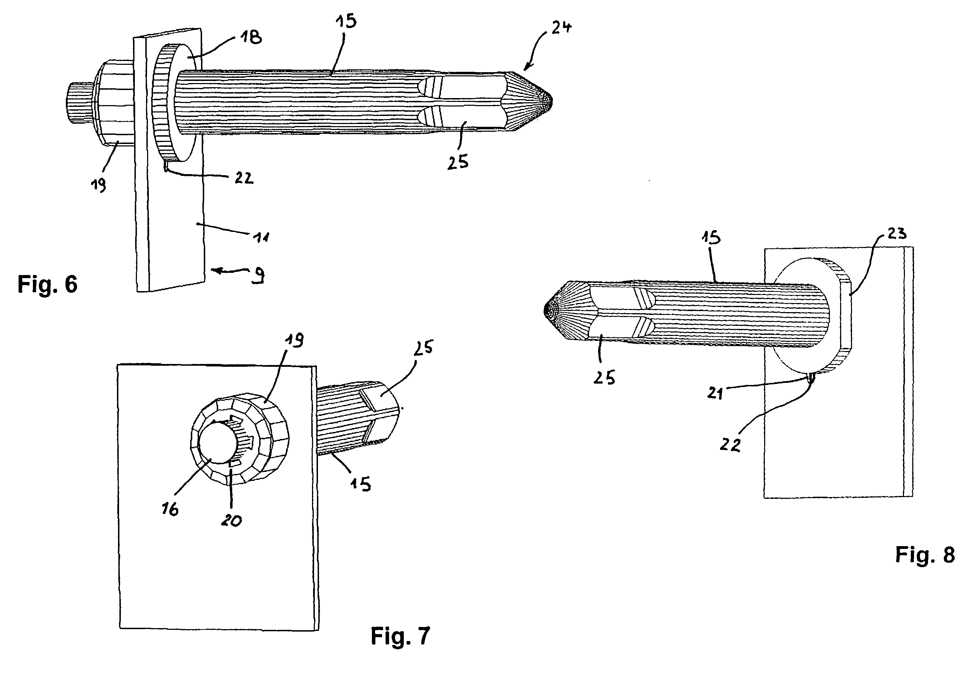

Anhand der Figur 8 erkennt man, dass der Flansch 18 eine Orientierungshilfe in Form einer seitlichen Fase 23 an seinem Außenumfang aufweist. Diese Fase 23 unterstützt die definierte Aufnahme des Einstellbolzens 15 über die Aufnahmevorrichtung eines Handhabungsautomaten und gewährleistet damit die automatisierte Montage.

Am freien Ende 24 des Einstellbolzens 15 ist eine Schlüsselfläche 25 vorgesehen. Diese ist als Sechskantansatz gestaltet und dient der Verstellung bzw. Wechselung des Einstellbolzens 15 mit Hilfe eines üblichen Maulschlüssels. Grundsätzlich kann die Verstellmöglichkeit auch durch einen Innensechskant im Einstellbolzen 15 realisiert werden.

Die Instrumententafel wird als komplett vormontiertes Mehrkomponentenmodul im Zuge der Endmontage eines Kraftfahrzeugs in die Kraftfahrzeugkarosserie eingefahren und mit den Montageöffnungen 6-8 im Instrumententafelträger 2 zu beiden Seiten auf die Tragbolzen 12, 13 und den Einstellbolzen 15 geschoben. Die Tragbolzen 12, 13 ebenso wie der Einstellbolzen 15 durchgreifen den Instrumententafelträger 2 auf seiner kompletten Breite. Nach diesem Montagevorgang erfolgt die Justierung der Instrumententafel im Kraftfahrzeuginneren relativ zu den übrigen Komponenten, beispielsweise die Türverkleidungen.

Hierzu wird der bzw. die Einstellbolzen 15 gedreht. Infolge der Verdrehung verlässt die Zentriernase 21 die Ausnehmung 22. Die Vorspannung durch den Federring 20 verursacht an der Zentriernase 21 eine hohe Reibung und mithin eine Selbsthemmung in jeder Verstellposition. Die rechteckige Gestaltung der Zentriernase 21 verhindert, dass diese auch bei kleinen Verdrehwinkeln nicht wieder in die Ausnehmung 22 zurück gleitet. Bei der Verdrehung (Pfeil P in Figur 2) des Einstellbolzens 15 dreht sich der Kopfabschnitt 16 in der Aufnahme 19. Der Instrumententafelträger 2 stützt sich am Einstellbolzen 15 ab und kann so infolge der Exzentrizität sowohl seitlich als auch in der Höhe verlagert werden. Nach der Justierung wird der Instrumententafelträger 2 und mithin die Instrumententafel fixiert. Dies erfolgt über die zumindest endseitig mit Gewindeabschnitten versehenen Tragbolzen 12. 13, auf denen der Instrumententafelträger 2 mit Gewindemuttern verspannt werden kann.

Die erfindungsgemäße Vorrichtung ist einfach im Aufbau und kommt mit wenigen Bauteilen aus. Sie ermöglicht eine präzise Justierung eines Mehrkomponentenmoduls innerhalb einer Kraftfahrzeugkarosserie. Die für die Betätigung des Einstellbolzens 15 vorgesehenen Schlüsselflächen 25 sind sehr gut von außen zugänglich. Mithin kann die Justierung der Montagevorgang rationell erfolgen.

## Patentansprüche

1. Vorrichtung zum Justieren der Einbaulage eines Mehrkomponentenmoduls, insbesondere einer Instrumententafel, innerhalb einer Kraftfahrzeugkarosserie, bei welcher ein Montageträger (2) des Mehrkomponentenmoduls über ein Verbindungsbauteil (9) an der Kraftfahrzeugkarosserie festlegbar ist und ein Einstellbolzen (15) mit einer Schlüsselfläche vorgesehen ist, der mit einem zur Längsachse exzentrischen Kopfabschnitt (16) eine Öffnung (17) im Verbindungsbauteil durchsetzt, wobei ein Flansch (18) unter Vorspannung am Verbindungsbauteil (9) anliegt und der Kopfabschnitt (16) in einer Aufnahme (19) gehalten sowie durch eine Sicherung (20) lageorientiert ist, **dadurch gekennzeichnet, dass** der Flansch (18) am Einstellbolzen (15) vorgesehen ist und der Kopfabschnitt (16) auf der anderen Seite des Verbindungsbauteils (9) in der Aufnahme (19) gehalten ist, wobei der Flansch (18) mit einer Zentriernase (21) versehen und am Verbindungsbauteil (9) eine Ausnehmung (22) für die Zentriernase (21) angeordnet ist und die Sicherung (20) als Federring ausgebildet ist.

2. Vorrichtung nach Patentanspruch 1, **dadurch gekennzeichnet, dass** der Flansch (18) eine Orientierungshilfe (23) zur Lagepositionierung aufweist.

3. Vorrichtung nach Patentanspruch 1 oder 2, **dadurch gekennzeichnet, dass** die Schlüsselfläche (25) am Außenumfang des Einstellbolzens (15) vorgesehen ist.

4. Vorrichtung nach einem der Patentansprüche 1 bis 3, **dadurch gekennzeichnet, dass** die Schlüsselfläche durch einen Innenmehrkant des Einstellbolzens gebildet ist.

5. Vorrichtung nach einem der Patentansprüche 1 bis 4, **dadurch gekennzeichnet, dass** dem Verbindungsbauteil (9) mindestens ein Tragbolzen (12, 13) zugeordnet ist.

## Claims

1. A device for adjusting the position in which a multi-component module, particularly an instrument board, is installed inside the body of a motor vehicle, wherein an assembly bracket (2) for the multi-component module is attachable to the body by a connecting part (9) and an adjusting pin (15) is provided with a key surface having a head portion (16) which is eccentric relative to the longitudinal axis and extends through an opening (17) in the connecting part, wherein a flange (18) under prestress abuts the connecting component (9) and the head portion (16) is held in a receiver (19) and guided in a position by a securing means (20), **characterised in that** the flange (18) is provided on the adjusting pin (15) and the head part (16) is held in the recess (19) on the other side of the connecting component (9), wherein the flange (18) has a centring lug (21) and the connecting component (9) has a recess (22) for the centring lug (21) and the securing means (20) is a spring washer.

2. A device according to claim 1, **characterised in that** the flange (18) has a positioning aid (23).

3. A device according to claim 1 or 2, **characterised in that** the key surface (25) is provided on the outer periphery of the adjustment pin (15).

4. A device according to any of claims 1 to 3, **characterised in that** the key surface is formed by an inner polygon on the adjustment pin.

5. A device according to any of claims 1 to 4, **characterised in that** the connecting component (9) is associated with at least one load-bearing bolt (12, 13).

## Revendications

1. Dispositif pour ajuster le positionnement d'un module à plusieurs composants, en particulier d'un panneau à instruments, à l'intérieur d'une carrosserie de véhicule automobile, dans lequel un support de montage (2) du module à plusieurs composants est susceptible d'être immobilisé sur la carrosserie du véhicule via un composant de jonction (9), et il est prévu un goujon de réglage (15) avec une surface à clef, qui traverse, par un tronçon de tête (16) excentrique par rapport à l'axe longitudinal, une ouverture (17) dans le composant de jonction, une bride (18) étant appliquée sous précontrainte contre le composant de jonction (9), et le tronçon de tête (16) est maintenu dans un logement (19) et orienté en position au moyen d'un blocage (20),
**caractérisé en ce que** la bride (18) est prévue sur le goujon de réglage (15) et le tronçon de tête (16) est maintenu dans le logement (19) sur l'autre côté du composant de jonction (9), ladite bride (18) étant pourvue d'un bec de centrage (21), et **en ce qu'**un logement (22) pour le bec de centrage (21) est ménagé sur le composant de jonction (9), et le blocage (20) est réalisé sous forme de bague élastique.

2. Dispositif selon la revendication 1, **caractérisé en ce que** la bride (18) comporte une aide d'orientation (23) pour le positionnement.

3. Dispositif selon l'une ou l'autre des revendications 1 est 2, **caractérisé en ce que** la surface à clef (25) est prévue sur la périphérie extérieure du goujon de réglage (15).

4. Dispositif selon l'une des revendications 1 à 3, **caractérisé en ce que** la surface à clef est formée par une empreinte creuse polygonale du goujon de réglage.

5. Dispositif selon l'une des revendications 1 à 4, **caractérisé en ce qu'**au moins un goujon porteur (12, 13) est associé au composant de jonction (9).
